# EUROPÄISCHE PATENTSCHRIFT

(11) **EP 3 959 031 B1**
(45) Veröffentlichungstag und Bekanntmachung des Hinweises auf die Patenterteilung: **27.03.2024**
(21) Anmeldenummer: 20732115.9
(22) Anmeldetag: 20.05.2020
(51) Int. Cl.: B23K 20/12, B61F 1/00, B61F 1/12

(54) **BAUTEILANORDNUNG UND VERFAHREN ZU SEINER HERSTELLUNG**
COMPONENT ARRANGEMENT AND METHOD FOR THE PRODUCTION THEREOF
AGENCEMENT DE PIÈCES ET SON PROCÉDÉ DE PRODUCTION

(30) Priorität: 19.06.2019 DE 102019208962
(43) Veröffentlichungstag der Anmeldung: 02.03.2022
(73) Patentinhaber: Siemens Mobility GmbH, 81739 München (DE)
(72) Erfinder: KRAWINKEL, Dirk, 45357 Essen (DE)
(74) Vertreter: Siemens Patent Attorneys
(86) Internationale Anmeldenummer: PCT/EP2020/064170
(87) Internationale Veröffentlichungsnummer: WO 2020/254052

(56) Entgegenhaltungen:
- EP-A2- 0 985 483
- EP-A2- 1 057 574
- EP-B1- 0 985 483
- EP-B1- 1 057 574
- DE-A1-102007 048 759
- JP-A- 2011 025 252

## Beschreibung

Die Erfindung bezieht sich auf eine Bauteilanordnung nach dem Oberbegriff von Anspruch 1 sowie auf ein Verfahren zu ihrer Herstellung.

So ist aus der JP 2011 025252 A eine Bauteilanordnung mit einem ersten und einem zweiten jeweils als Metallprofil vorliegenden Bauteil bekannt, die auf einander gegenüber und schräg zueinander liegenden Außenseiten der Bauteilanordnung an einer erste Schweißstelle an der einen Außenseite und einer zweiten Schweißstelle an der anderen Außenseite miteinander gefügt sind, wobei an die erste Schweißstelle angrenzende Abschnitte des ersten und des zweiten Bauteils und an die zweite Schweißstelle angrenzende Abschnitte des ersten und des zweiten Bauteils jeweils zusammen ebene Auflageflächen bilden, die parallel zueinander ausgerichtet sind, und die Auflageflächen jeweils in einem spitzen Winkel zu ihrer zugeordneten Außenseite stehen und das erste Bauteil und das zweite Bauteil jeweils mittels Reibrührschweißen an der ersten Schweißstelle und der zweiten Schweißstelle (9) gefügt sind.

Des Weiteren wird in der EP O 985 483 A2 eine flach ausgebildete Bauteilanordnung mit einem ersten und einem zweiten jeweils als Metallprofil vorliegenden Bauteil beschrieben, wobei einander zugewandte Seiten der Bauteile jeweils einen die Außenseiten verbindenden Steg aufweisen und die Stege parallel zueinander ausgerichtet sind.

Solche Bauteilanordnungen, bei denen es sich beispielsweise um Komponenten eines Untergestells eines Schienenfahrzeugs handeln kann, wie Querträger, Mittellangträger, Hauptquerträger und Langträger, werden bisher unter Einsatz des MIG-Schweißverfahrens gefügt. Dabei kommt eine Drehvorrichtung zum Einsatz, da die an die Schweißnähte angrenzenden Außenflächen nicht parallel zueinander stehen. Ein Reibrühr-Schweißverfahren (FSW) ist bisher nicht einsetzbar, da die Stege an den einander zugeordneten Seiten der beiden Bauteile nicht in einem Kraftfluss von einem Reibrühr-Schweißwerkzeug an der einen Außenseite aus über die Stege zu einem Maschinentisch, auf dem die Bauteilanordnung abgestützt ist, liegen.

Dabei ist zu berücksichtigen, dass das MIG-Schweißverfahren im Vergleich zum Reibrührschweißen wesentlich aufwändiger ist. Der eigentliche Schweißprozess dauert sehr viel länger, da beispielsweise 5 bis 6 Lagen auf jeder Seite geschweißt werden müssen. Zudem entsteht ein erheblicher Verzug beim Abkühlen und damit ein hoher nachträglicher Richtaufwand. Weitere Kosten werden dadurch verursacht, die Schweißnahtqualität zu prüfen. Dabei sind zerstörungsfreie Prüfungen erforderlich, wie beispielsweise eine Röntgenuntersuchung.

Ausgehend hiervon liegt der Erfindung die Aufgabe zugrunde, die eingangs genannte Bauteilanordnung derart weiterzuentwickeln, dass sie auch mittels Reibrührschweißen herstellbar ist. Zudem soll ein Verfahren zum Herstellen der Bauteilanordnung angegeben werden.

Hinsichtlich der Bauteilanordnung an sich wird die Aufgabe durch eine Bauteilanordnung mit den Merkmalen des Anspruchs 1 gelöst.

Danach zeichnet sich die eingangs beschriebene Bauteilanordnung dadurch aus, dass einander zugewandte Seiten der Bauteile jeweils einen die Außenseiten verbindenden Steg aufweisen und die Stege parallel zueinander ausgerichtet sind, wobei die Stege senkrecht zu den Auflageflächen verlaufen.

In dieser Weise werden um die erste und die zweite Schweißstelle herum zueinander parallele, ebene Auflageflächen geschaffen, auf denen die Bauteilanordnung für einen Reibrühr-Schweißvorgang abgestützt werden kann, beispielsweise auf einem Maschinentisch. Die vorgesehenen Stege liegen dann im Kraftfluss eines gegen eine der Außenseiten drückenden Reibrühr-Schweißwerkzeugs, so dass der Schweißvorgang ohne Weiteres von statten gehen kann. Dies gilt für beide vorgesehenen Schweißnähte auf den einander gegenüberliegenden Außenseiten der Bauteilanordnung.

Bevorzugt können die beiden Stege derart gekrümmt sein, dass eine Annäherung der einander zugewandten Seiten der Bauteile eine Zentrierwirkung hat. Dies vereinfacht eine Vorjustierung der Bauteile zueinander zur Vorbereitung eines Reibrühr-Schweißvorgangs. Alternativ ist es auch möglich, dass die beiden Stege gerade ausgebildet sind und sich von der einen Außenseite der Bauteilanordnung zur anderen Seite der Bauteilanordnung erstrecken.

Die Bauteilanordnung kann im Querschnitt allgemein trapezförmig sein, und die Schweißstellen können zwischen den beiden Bauteilen an den einander gegenüber und schräg zueinander stehenden Seiten des Trapezes vorgesehen sein. In dieser Weise sind die beiden Außenseiten der Bauteilanordnung ohne Schweißnähte parallel zueinander ausgerichtet, was einen Anschluss beispielsweise eines Fahrzeugbodens an einen Außenlangträger, der von der Bauteilanordnung gebildet ist, eines Schienenfahrzeugs vereinfacht.

Insbesondere für den Aufbau von Untergestellen eines Schienenfahrzeugs können die Bauteile als langgestreckte Strangpressprofile, beispielsweise aus Aluminium, vorliegen. Anders ausgedrückt, kann die Bauteilanordnung als Teil eines Untergestells eines Schienenfahrzeug-Wagenkastens ausgebildet sein. Solche Komponenten können beispielsweise Querträger, der Mittellangträger, der Hauptquerträger und/oder Außenlangträger sein.

Die oben genannte Aufgabe wird hinsichtlich des Verfahrens gelöst durch ein Verfahren nach Anspruch 7.

Danach ist ein Verfahren zur Herstellung einer Bauteilanordnung vorgesehen, mit einem ersten und einem zweiten jeweils als Metallprofil vorliegenden Bauteil, die auf einander gegenüber und schräg zueinander liegenden Außenseiten der Bauteilanordnung an einer erste Schweißstelle an der einen Außenseite und einer zweiten Schweißstelle an der anderen Außenseite miteinander gefügt werden, wobei einander zugewandte Seiten der Bauteile jeweils einen die Außenseiten verbindenden Steg aufweisen und die Stege parallel zueinander ausgerichtet sind. An die erste Schweißstelle angrenzende Abschnitte des ersten und des zweiten Bauteils und an die zweite Schweißstelle angrenzende Abschnitte des ersten und des zweiten Bauteils werden jeweils zusammen als ebene Auflageflächen ausgebildet, die parallel zueinander ausgerichtet sind, zu denen die Stege senkrecht verlaufen und die jeweils in einem spitzen Winkel zu ihrer zugeordneten Außenseite stehen. Das erste Bauteil und das zweite Bauteil werden jeweils mittels Reibrührschweißen an der ersten Schweißstelle und der zweiten Schweißstelle gefügt.

Vorteile dieses Verfahrens sind bereits oben anhand der Beschreibung der Bauteilanordnung näher erläutert.

Bevorzugt können bei dem Verfahren die an die erste und die zweite Schweißstelle angrenzenden Abschnitte des ersten und des zweiten Bauteils derart nachbearbeitet werden, dass die Außenseiten insgesamt eine gleichbleibende Schräge zueinander aufweisen. Insbesondere können das erste und das zweite Bauteil im Bereich der Auflageflächen mit geeignet ausgebildeten Nasen vorgesehen sein. Diese können nach dem Fügevorgang mittels Reibrührschweißen bei Bedarf wenigstens teilweise wieder entfernt werden, so dass sich im Bereich der Schweißstellen und in den daran angrenzenden Oberflächenabschnitten der Außenseiten eine insgesamt ebene Fläche ergibt.

Zur Herstellung von Schweißnähten wird beispielsweise ein Reibrühr-Schweißwerkzeug an der Bauteilanordnung linear vorbei geführt.

Ein Ausführungsbeispiel der Erfindung wird nachfolgend unter Bezugnahme auf die Zeichnungen noch näher erläutert. Dabei werden für funktionsgleiche Komponenten dieselben Bezugszeichen verwendet. Es zeigen:
- Figur 1: eine schematische Querschnittsansicht eines Querträgers für ein Untergestell eines Schienenfahrzeugs in einer ersten Ausführungsform,
- Figur 2: eine schematische Querschnittsansicht eines Querträgers für ein Untergestell eines Schienenfahrzeugs in einer zweiten Ausführungsform,
- Figur 3: eine schematische Querschnittsansicht einer Spannvorrichtung, in die der Querträger von Figur 2 eingelegt ist, für einen Reibrührschweiß-Vorgang,
- Figur 4: eine schematische Querschnittsansicht einer weiteren Spannvorrichtung, in die der Querträger von Figur 2 eingelegt ist, für einen ReibrührSchweißvorgang und
- Figur 5: eine schematische Querschnittsansicht des Querträgers von Figur 2 nach mechanischer Bearbeitung.

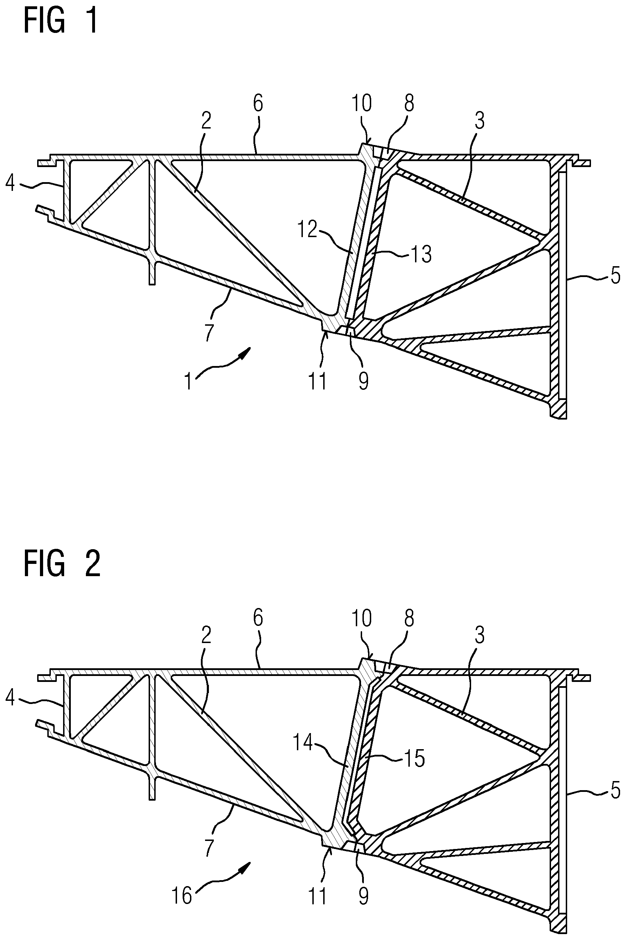

Figur 1 veranschaulicht einen Querträger 1, der in ein Untergestell eines Schienenfahrzeugs einzubauen ist. Der Querträger 1 als Beispiel für eine Bauteilanordnung oder -gruppe setzt sich aus zwei Bauteilen 2, 3 zusammen, die jeweils als ggf. langgestreckte Aluminium-Strangpressprofile vorliegen. Im dargestellten Querschnitt zeigt der Querträger 1 eine allgemeine Trapezform. Dabei sind die beiden Außenseiten 4, 5, die in Figur 1 rechts und links liegen, parallel zueinander angeordnet. Demgegenüber stehen einander gegenüber liegenden Außenseiten 6, 7 des Querträgers 1 in einem schrägen Winkel zueinander. Aufgrund dessen, war FSW-Schweißen bei einer solchen Anordnung bisher nicht möglich.

Die beiden Bauteile 2, 3 sind an FSW-Schweißstellen 8, 9 gefügt, wovon die eine Schweißstelle 8 an der Außenseite 6 und die andere Schweißstelle 9 an der Außenseite 7 angeordnet ist. Sich senkrecht zur Zeichnungsebene ergebende Schweißnähte jeweils durch die Schweißstellen 8, 9 verlaufen parallel zueinander.

Während eines Reibrühr-Schweißvorgangs wird eine Kraft F auf eine jeweilige Auflagefläche 10, 11 ausgeübt, genauer gesagt, auf eine jeweilige Stoßstelle zwischen den Bauteilen 2, 3 an der jeweiligen Außenseite 6, 7.

Einander zugewandte Seiten der Bauteile 2, 3 werden jeweils von Stegen 12, 13 gebildet, die parallel zueinander und senkrecht zu den Auflageflächen 10, 11 verlaufen sowie jeweils die Außenseiten 6, 7 des Querträgers 1 miteinander verbinden.

Die Auflageflächen 10, 11 werden von einander angrenzenden Abschnitten der Bauteile 2, 3 im Bereich der ersten und der zweiten Schweißstelle 8, 9 gebildet, sind eben und stehen parallel zueinander. Die jeweilige Auflagefläche 10 an der Außenseite 6 und 11 an der Außenseite 7 stehen jeweils in einem spitzen Winkel zu ihren zugeordneten Außenseiten 6, 7. Diese spitzen Winkel weichen voneinander ab, da die Außenseite 6 schräg zu der Außenseite 7 steht.

Die in Figur 2 veranschaulichte Ausführungsform eines Querträgers 16 unterscheidet sich von derjenigen, die anhand von Figur 1 erläutert worden ist, ausschließlich in der Ausführung der Stege. Stege 14, 15 bei dem Querträger 16 nach Figur 2 sind jeweils in der Nähe der Außenseiten 6, 7 gleichsinnig gekrümmt, so dass sie bei einer Annäherung der Bauteile 2, 3 zueinander eine Zentrierwirkung haben.

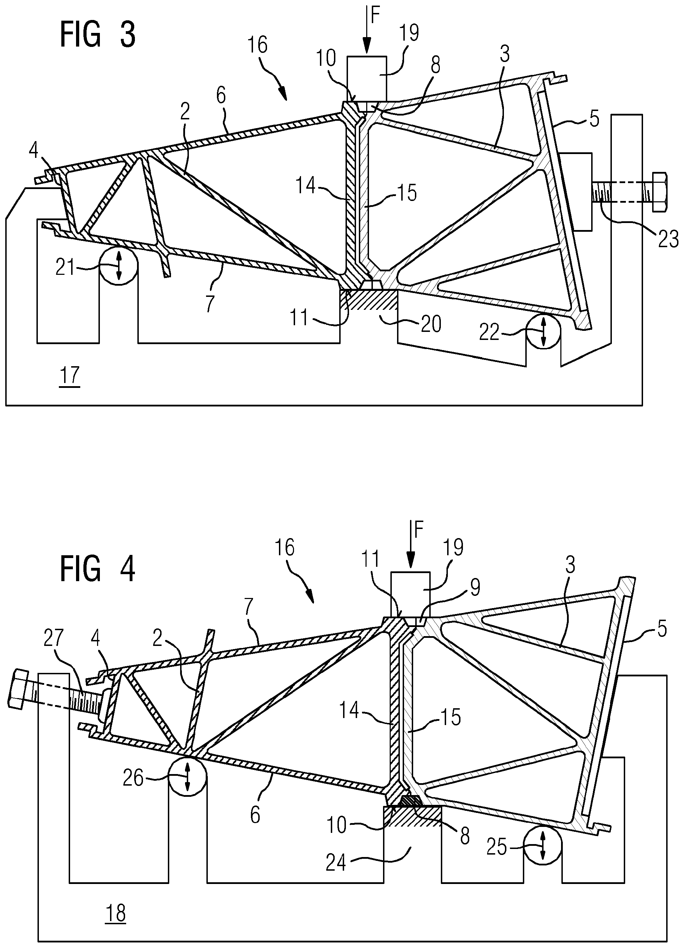

Die Figuren 3 und 4 veranschaulichen den Querträger 16 von Figur 3, wenn er in eine Spannvorrichtung 17 bzw. Spannvorrichtung 18 eingesetzt ist, so dass mittels Reibrührschweißen die erforderlichen Schweißnähte hergestellt werden können. In Figur 3 wird an der in Figur 2 oben liegenden Außenseite 6 geschweißt, so dass ein Reibrühr-Schweißwerkzeug 19, welches die Kraft F ausübt, im Bereich der Auflagefläche 10 zum Einsatz kommt. Die Auflagefläche 11 der gegenüberliegenden Schweißstelle 9 ist auf einem Auflager 20 der Spannvorrichtung 17 abgestützt. Im Betrieb des Reibrühr-Schweißwerkzeugs 18 wird die von ihm ausgeübte Kraft F über die Stege 14, 15 (oder in Fig. 1 über die Stege 12, 13) in das Auflager 20 der Spannvorrichtung 17 geleitet. Die Spannvorrichtung 17 weist zu beiden Seiten des Auflagers 20 weitere, höhenverstellbare Auflager 21, 22 auf, welche den Querträger 16 abstützen. Ein seitlich vorgesehenes Spannmittel 22 dient zur Fixierung des Querträgers 16 in der Spannvorrichtung 17.

In der Darstellung von Figur 4 ist der Querträger 16 gegenüber seiner Position in Figur 3 derart gedreht, dass nunmehr die Auflagefläche 10 mit bereits vorliegender Schweißnaht auf einem Auflager 24 abgestützt ist. Auch hier weist die Spannvorrichtung 18 jeweils seitlich von dem Auflager 24 weitere höhenverstellbare Auflager 25, 26 auf, die gemeinsam die Außenseite 6 des Hauptquerträgers 16 abstützen. Das Schweißwerkzeug 19 greift nunmehr an der Auflagefläche 11 an. Eine Fixierung des Querträgers in der Spannvorrichtung 18 erfolgt mit Hilfe eines Spannmittels 27.

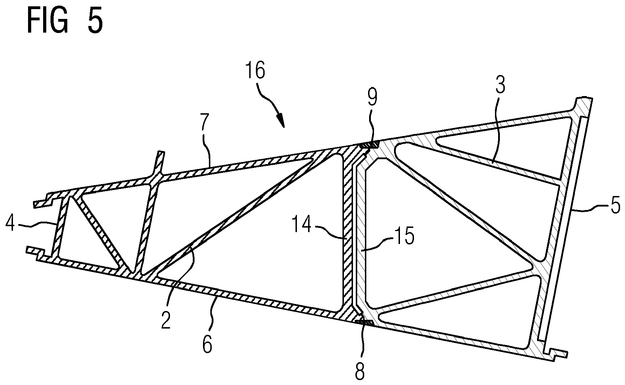

Figur 5 zeit den Querträger 16 in einem mechanisch nachbearbeiteten Zustand, bei dem die Außenseiten 6, 7 ebene Flächen sind, d.h. der jeweilige Bereich um die Schweißstellen 8, 9 herum derart nachbearbeitet ist, dass die jeweilige Außenseite 6, 7 keinerlei Erhöhungen mehr aufweist.

## Patentansprüche

1. Bauteilanordnung mit einem ersten und einem zweiten jeweils als Metallprofil vorliegenden Bauteil (2, 3), die auf einander gegenüber und schräg zueinander liegenden Außenseiten (6, 7) der Bauteilanordnung an einer erste Schweißstelle (8) an der einen Außenseite (6) und einer zweiten Schweißstelle (9) an der anderen Außenseite (7) miteinander gefügt sind, wobei
an die erste Schweißstelle (8) angrenzende Abschnitte des ersten und des zweiten Bauteils (2, 3) und an die zweite Schweißstelle (9) angrenzende Abschnitte des ersten und des zweiten Bauteils (2, 3) jeweils zusammen ebene Auflageflächen (10, 11) bilden, die parallel zueinander ausgerichtet sind, und die Auflageflächen (10, 11) jeweils in einem spitzen Winkel zu ihrer zugeordneten Außenseite (6, 7) stehen und das erste Bauteil (2) und das zweite Bauteil (3) jeweils mittels Reibrührschweißen an der ersten Schweißstelle (8) und der zweiten Schweißstelle (9) gefügt sind,
**dadurch gekennzeichnet, dass**
einander zugewandte Seiten der Bauteile (2, 3) jeweils einen die Außenseiten (6, 7) verbindenden Steg (12, 13, 14, 15) aufweisen und die Stege (12, 13, 14, 15) parallel zueinander ausgerichtet sind, wobei die Stege (12, 13, 14, 15) senkrecht zu den Auflageflächen (10, 11) verlaufen.

2. Bauteilanordnung nach Anspruch 1,
**dadurch gekennzeichnet, dass**
die beiden Stege (14, 15) derart gekrümmt sind, dass eine Annäherung der einander zugewandten Seiten der Bauteile (2, 3) eine Zentrierwirkung hat.

3. Bauteilanordnung nach Anspruch 1 oder 2,
**dadurch gekennzeichnet, dass**
die Bauteilanordnung (1) im Querschnitt allgemein trapezförmig ist und die Schweißstellen (8, 9) zwischen den beiden Bauteilen (2, 3) an den schräg zueinander stehenden Seiten des Trapezes vorgesehen sind.

4. Bauteilanordnung nach einem der Ansprüche 1 bis 3,
**dadurch gekennzeichnet, dass**
die Bauteile (2, 3) als langgestreckte Strangpressprofile vorliegen.

5. Bauteilanordnung nach einem der Ansprüche 1 bis 4,
**dadurch gekennzeichnet, dass**
sie als Teil eines Untergestells eines Schienenfahrzeug-Wagenkastens ausgebildet ist.

6. Bauteilanordnung nach Anspruch 5,
**dadurch gekennzeichnet, dass**
sie als Querträger (1, 16), Mittellangträger, Hauptquerträger und/oder Außenlangträger ausgebildet ist.

7. Verfahren zur Herstellung einer Bauteilanordnung mit einem ersten und einem zweiten jeweils als Metallprofil vorliegenden Bauteil (2, 3), die auf einander gegenüber und schräg zueinander liegenden Außenseiten (6, 7) der Bauteilanordnung an einer erste Schweißstelle (8) an der einen Außenseite (6) und einer zweiten Schweißstelle (9) an der anderen Außenseite (7) miteinander gefügt werden, wobei
an die erste Schweißstelle (8) angrenzende Abschnitte des ersten und des zweiten Bauteils (2, 3) und an die zweite Schweißstelle (9) angrenzende Abschnitte des ersten und des zweiten Bauteils (2, 3) jeweils zusammen als ebene Auflageflächen (10, 11) ausgebildet werden, die parallel zueinander ausgerichtet sind, und die Auflageflächen (10, 11) jeweils in einem spitzen Winkel zu ihrer zugeordneten Außenseite (6, 7) stehen und das erste Bauteil (2) und das zweite Bauteil (3) jeweils mittels Reibrührschweißen an der ersten Schweißstelle (8) und der zweiten Schweißstelle (9) gefügt werden,
**dadurch gekennzeichnet, dass**
einander zugewandte Seiten der Bauteile (2, 3) jeweils einen die Außenseiten (6, 7) verbindenden Steg (12, 13, 14, 15) aufweisen und die Stege (12, 13, 14, 15) parallel zueinander ausgerichtet werden, wobei die Stege (12, 13, 14, 15) zu den Auflageflächen (10, 11) senkrecht verlaufen.

8. Verfahren nach Anspruch 7,
**dadurch gekennzeichnet, dass**
die an die erste und die zweite Schweißstelle (8, 9) angrenzenden Abschnitte des ersten und des zweiten Bauteils (2, 3) derart nachbearbeitet werden, dass die Außenseiten (6, 7) insgesamt eine gleichbleibende Schräge zueinander aufweisen.

## Claims

1. Component arrangement with a first and a second component (2, 3), which are each in the form of a metal profile and, on mutually opposite and inclined outer sides (6, 7) of the component arrangement, are joined to each other at a first welding point (8) on one outer side (6) and at a second welding point (9) on the other outer side (7), wherein
sections of the first and second components (2, 3) adjoining the first welding point (8) and sections of the first and second components (2, 3) adjoining the second welding point (9) each together form flat bearing surfaces (10, 11) which are oriented parallel to each other, and the bearing surfaces (10, 11) are each at an acute angle to their associated outer side (6, 7), and the first component (2) and the second component (3) are each joined by friction stir welding at the first welding point (8) and at the second welding point (9),
**characterized in that**
mutually facing sides of the components (2, 3) each have a web (12, 13, 14, 15) connecting the outer sides (6, 7), and the webs (12, 13, 14, 15) are oriented parallel to one another, wherein the webs (12, 13, 14, 15) run perpendicular to the bearing surfaces (10, 11).

2. Component arrangement according to Claim 1,
**characterized in that**
the two webs (14, 15) are curved in such a way that a movement of the mutually facing sides of the components (2, 3) towards each other has a centring effect.

3. Component arrangement according to Claim 1 or 2,
**characterized in that**
the component arrangement (1) is generally trapezoidal in cross section, and the welding points (8, 9) between the two components (2, 3) are provided on the mutually inclined sides of the trapezoid.

4. Component arrangement according to one of Claims 1 to 3,
**characterized in that**
the components (2, 3) are present as elongate extruded profiles.

5. Component arrangement according to one of Claims 1 to 4,
**characterized in that**
it is designed as part of an underframe of a rail vehicle carriage body.

6. Component arrangement according to Claim 5,
**characterized in that**
it is designed as a transverse support member (1, 16), central longitudinal support member, main transverse support member and/or outer longitudinal support member.

7. Method for producing a component arrangement with a first and a second component (2, 3), which are each in the form of a metal profile and, on mutually opposite and inclined outer sides (6, 7) of the component arrangement, are joined to each other at a first welding point (8) on one outer side (6) and at a second welding point (9) on the other outer side (7), wherein sections of the first and second components (2, 3) adjoining the first welding point (8) and sections of the first and second components (2, 3) adjoining the second welding point (9) are each formed together as flat bearing surfaces (10, 11) which are oriented parallel each other, and the bearing surfaces (10, 11) are each at an acute angle to their associated outer side (6, 7), and the first component (2) and the second component (3) are each joined by friction stir welding at the first welding point (8) and at the second welding point (9),
**characterized in that**
mutually facing sides of the components (2, 3) each have a web (12, 13, 14, 15) connecting the outer sides (6, 7), and the webs (12, 13, 14, 15) are oriented parallel to one another, wherein the webs (12, 13, 14, 15) run perpendicular to the bearing surfaces (10, 11).

8. Method according to Claim 7,
**characterized in that**
the sections of the first and second components (2, 3) adjoining the first and second welding points (8, 9) are reworked in such a way that the outer sides (6, 7) overall have a constant inclination to each other.

## Revendications

1. Agencement de pièces comprenant une première et une deuxième pièces (2, 3) se présentant chacune sous la forme d'un profilé métallique, qui sont jointes l'une à l'autre sur des côtés (6, 7) extérieurs, opposés l'un à l'autre et inclinés l'un par rapport à l'autre, de l'agencement de pièces en un premier point (8) de soudure sur le un côté (6) extérieur et en un deuxième point (9) de soudure sur l'autre côté (7) extérieur, dans lequel
des parties, voisines du premier point (8) de soudure, de la première et de la deuxième pièces (2, 3) et des parties, voisines du deuxième point (9) de soudure, de la première et de la deuxième pièces (2, 3), forment respectivement ensemble des surfaces (10, 11) planes d'appui, qui sont dirigées parallèlement entre elles, et les surfaces (10, 11) d'appui font respectivement un angle aigu avec le côté (6, 7) extérieur, qui leur est affecté, et la première pièce (2) et la deuxième pièce (3) sont jointes respectivement au moyen d'un soudage par friction malaxage au premier point (8) de soudure et au deuxième point (9) de soudure,
**caractérisé en ce que**
des côtés, tournés l'un vers l'autre, des pièces (2, 3) ont respectivement une entretoise (12, 13, 14, 15) reliant les côtés (6, 7) extérieurs et les entretoises (12, 13, 14, 15) sont dirigées parallèlement entre elles, dans lequel les entretoises (12, 13, 14, 15) s'étendent perpendiculairement aux surfaces (10, 11) d'appui.

2. Agencement de pièces suivant la revendication 1,
**caractérisé en ce que**
les deux entretoises (14, 15) sont incurvées, de manière à ce qu'un rapprochement des côtés tournés l'un vers l'autre des pièces (2, 3) a un effet de centrage.

3. Agencement de pièces suivant la revendication 1 ou 2,
**caractérisé en ce que**
l'agencement (1) de pièces est, en section transversale, d'une manière générale, trapézoïdal et les points (8, 9) de soudure sont prévus entre les deux pièces (2, 3) aux côtés inclinés l'un par rapport à l'autre du trapèze.

4. Agencement de pièces suivant l'une des revendications 1 à 3,
**caractérisé en ce que**
les pièces (2, 3) se présentent sous la forme de profilés filés à la presse s'étendant en longueur.

5. Agencement de pièces suivant l'une des revendications 1 à 4,
**caractérisé en ce qu'**
il est constitué en tant que pièce d'un châssis de la caisse d'un véhicule ferroviaire.

6. Agencement de pièces suivant la revendication 5,
**caractérisé en ce qu'**
il est constitué sous la forme de traverses (1, 16) de longerons médians, de traverses principales et/ou de longerons extérieurs.

7. Procédé de fabrication d'un agencement de pièces comprenant une première et une deuxième pièces (2, 3) se présentant respectivement sous la forme d'un profilé métallique, que l'on joint l'une à l'autre sur des côtés (6, 7) extérieurs, opposés l'un à l'autre et inclinés l'un par rapport à l'autre, de l'agencement de pièces en un premier point (8) de soudure sur le un côté (6) extérieur et en un deuxième point (9) de soudure sur l'autre côté (7) extérieur, dans lequel
on forme, sur des parties, voisines du premier point (8) de soudure, de la première et de la deuxième pièces (2, 3) et sur des parties, voisines du deuxième point (9) de soudure, de la première et de la deuxième pièces (2, 3) respectivement ensemble des surfaces (10, 11) planes d'appui, qui sont dirigées parallèlement entre elles, et les surfaces (10, 11) d'appui font respectivement un angle aigu avec le côté (6, 7) extérieur, qui leur est affecté, et on joint la première pièce (2) et la deuxième pièce (3) respectivement au moyen d'un soudage par friction malaxage au premier point (8) de soudure et au deuxième point (9) de soudure,
**caractérisé en ce que**
des côtés, tournés l'un vers l'autre, des pièces (2, 3) ont chacun une entretoise (12, 13, 14, 15) reliant les côtés (6, 7) extérieurs et on dirige les entretoises (12, 13, 14, 15) parallèlement entre elles, les entretoises (12, 13, 14, 15) s'étendant perpendiculairement aux surfaces (10, 11) d'appui.

8. Procédé suivant la revendication 7,
**caractérisé en ce que**
l'on finit les parties, voisines du premier et du deuxième points (8, 9) de soudure, de la première et de la deuxième pièces (2, 3), de manière à ce que les côtés (6, 7) extérieurs aient l'un par rapport à l'autre, dans l'ensemble, une inclinaison constante.
